# EUROPEAN PATENT SPECIFICATION

(11) **EP 4 132 264 B1**
(45) Date of publication and mention of the grant of the patent: **28.10.2026**
(21) Application number: 21783738.4
(22) Date of filing: 01.04.2021
(51) Int. Cl.: A01G 23/04, A01C 5/04, A01C 11/02

(54) **PLANTING APPARATUS**
PFLANZGERÄT
APPAREIL DE PLANTATION

(30) Priority: 06.04.2020 FI 20205358
(43) Date of publication of application: 15.02.2023
(73) Proprietor: Ponsse Oyj, 74200 Vieremä (FI)
(72) Inventor: HYVÖNEN, Jukka, 74200 Vieremä (FI); MOILANEN, Tuomo, 74200 Vieremä (FI); EINOLA, Kalle, 74200 Vieremä (FI)
(74) Representative: Kolster Oy Ab
(86) International application number: PCT/FI2021/050245
(87) International publication number: WO 2021/205069

(56) References cited:
- CN-A- 107 432 233
- CN-A- 109 699 432
- CN-U- 208 821 367
- FI-B- 62 751
- IT-A1- TO20 111 173
- IT-A1- TO20 111 173
- NL-A- 7 811 699
- SE-C2- 501 311
- US-A- 3 306 239
- US-A- 3 306 239
- US-A- 4 807 543
- US-A1- 2018 160 616
- PLANTMA: "Plantma X Forest trials November 2019", YOUTUBE, XP055863965, Retrieved from the Internet <URL:https://www.youtube.com/watch?v=HVXWnBXzxmw>
- TOMAS ERSSON: "The Silva Nova Tree Planting Machine during the 1980s [Planteringsmaskinen Silva Nova på 1980-talet]", YOUTUBE, XP055863968, Retrieved from the Internet <URL:https://www.youtube.com/watch?v=iXLVZ0-u_ks>

## Description

### Background

The solution relates to mechanical planting of seedlings. The solution may relate to, for example, planting tree seedlings. The solution in particular relates to a situation where soil is tilled prior to planting seedlings. Document US 3 306 239 A discloses a method and means for transplanting. Document NL 7 811 699 A discloses a tree planting machine unit which has a frame with a movable sub frame for drill and tree clamp, and deflectors to return soil to drilled hole after planting. Document IT TO20 111 173 A1 discloses a transplanting machine. Document US 2018/160616 A1 discloses a planting apparatus of nursery trees and a planting vehicle of nursery trees.

### Brief disclosure

The goal is a new type of device and method for tilling of soil and mechanical planting of seedlings. The solution is characterised by what is stated in the independent claims.

The solution puts forth an apparatus for planting seedlings, which may be installed on a transport platform. The apparatus comprises at least one tilling member for preparing a planting area, and at least one planting member, installed at a distance from the tilling member and arranged to put in a seedling in said planting spot. The apparatus is arranged to move, stopping at intervals corresponding to the distance between the tilling member and planting member, and in response to the stopping of the apparatus the planting member is arranged to put in a seedling in the planting spot prepared by the tilling member.

### Brief description of the figures

The solution will now be explained in greater detail with reference to the attached drawings in which:
Figure 1 is a schematic side view of a forwarder and a transport platform having a planting apparatus;
Figure 2 is a schematic side view of a planting apparatus having a water tank at the bottom;
Figure 3 is a schematic side view of a planting apparatus having a water tank at the front;
Figure 4 is a schematic side view of an installation unit.
Figure 5 is a schematic top view of the operation of a work machine and a planting apparatus arranged on a transport platform, and of a work result.
Figure 6 shows a schematic method for tilling and planting seedlings.

### Detailed description

The solution relates to an apparatus used in mechanical planting of seedlings. Work stages the apparatus carries out comprise at least preparing a land area for planting a seedling and planting the seedling. In the apparatus, preparing the land area and planting a seedling are separate actions, allowing them to be simultaneously carried out. With this procedure, temporal effectiveness is achieved compared to a typical arrangement in mechanical forest processing where during the operation of one device, the other devices are waiting for their turn.

Compared to manual planting, mechanical planting has the advantage of uniform quality of the work result, in particular the even planting interval between seedlings. Manual planting is labour-intensive, so mechanical planting has the advantage of cost savings in the labour force.

The solution puts forth an apparatus for planting seedlings, which may be installed on a transport platform. The apparatus comprises at least one tilling member for preparing a planting area, and at least one planting member, installed at a distance from the tilling member and arranged to put in a seedling in said planting spot. The apparatus is arranged to move, stopping at intervals corresponding to the distance between the tilling member and planting member, and in response to the stopping of the apparatus the planting member is arranged to put in a seedling in the planting spot prepared by the tilling member. In an example, the moving is arranged by installing the apparatus on a transport platform which is made move by a suitable work machine.

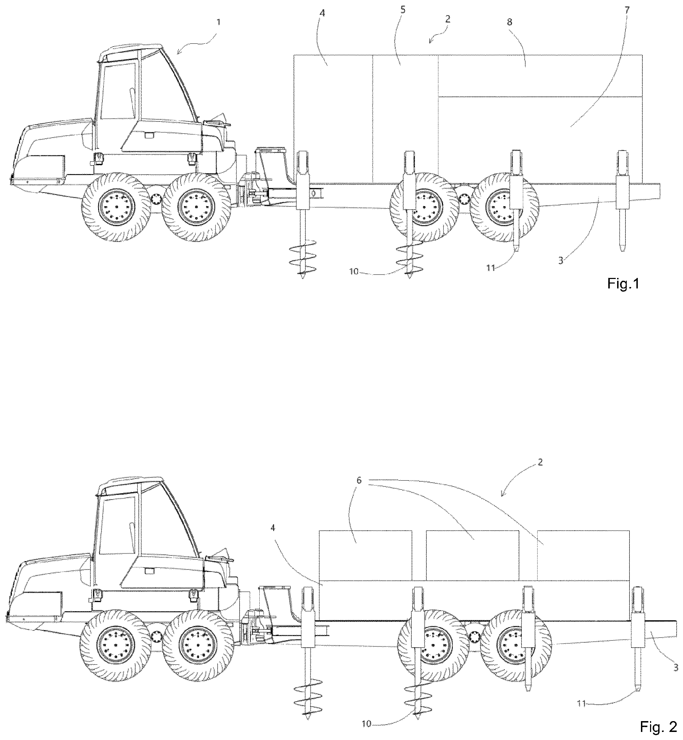

Figure 1 shows an example of a possible embodiment in which an apparatus 2 suitable for planting tree seedlings has been installed in place of a cargo space of a forwarder 1 typically used for mechanical harvesting of a forest. It is possible to install the apparatus on any other appropriate transport platform, and to use other suitable machines or vehicles, such as a tractor, to transport it. An advantage of an apparatus installed on a transport platform is that it may be installed to be used when needed and stored at other times. The transport platform may be, for example, a trailer, a board provided with wheels or a carriage. The transport platform may be moved by pulling it with a device suited for the purpose, such as a tractor, car, forest work machine, or a device made for the purpose. In an example, the transport platform is a cargo space of a forest work machine. The means needed in the transportation of timber, such as side bunks, may have been removed from the cargo space. When the apparatus is installable on a transport platform exclusively for the time it is used for planting, a separate machine or vehicle is not needed, but e.g. a forwarder may be available for use in its own function in the harvesting chain. In an example, the transport platform may comprise a fixed platform comprised by a suitable vehicle, work machine, or a purpose-built vehicle moving it. In an example, the transport platform is not separate from a work machine or vehicle moving it, but an applicable part of the work machine or vehicle to which the apparatus suitable for planting seedlings is installable for the duration that the task takes. For example, the transport platform may comprise a platform of a pickup truck or a part of an off-road vehicle, suitable for carrying a load, or a suitable part of another suitable vehicle.

Figure 1 shows, by way of example, an apparatus 2 suitable for mechanical planting of trees. The figure shows a forwarder 1 moving the apparatus and a transport platform 3. In addition, the apparatus 2 of the Figure comprises a tank 4 for carrying irrigation water, a second tank 5 for transporting fertilizers, a seedling handling unit which comprises a required space for seedling boxes 7, a seedling gripper 8 whose task it is to take a seedling to a planting member 11, as well as members for moving and regulating the irrigation water and fertilizers for use. The tank comprises a space formed by a bottom, walls, and ceiling for placing the liquid, and a route for placing the liquid in the tank and for removing it from the tank.

Typically, the planting of a forest in a mechanical manner with an apparatus such as the one described is done on a plantation having a flat ground, the tree stand grows well, and the turnover time from planting to final felling is quick. The apparatus according to the solution is particularly well suited for use on flat terrain and forest plantations where trees are grown controllably. An example is eucalyptus plantations. However, the apparatus may be applied for use in growth environments and conditions of other kinds, and for other wood species. Forests and forestation of new areas play a bigger and bigger role in the carbon dioxide balance of the Earth, so the demand for efficient planting methods will increase even more in the future.

Figure 2 shows an example of an embodiment of the apparatus and the work machine transporting it. In the example of Figure 2, the apparatus is arranged on a transport platform, and the tank covers the transport platform in the longitudinal direction. As shown in the embodiment of Figure 2, the tank 4 covers the transport platform 3 in the longitudinal direction, and the seedling handling units 6 are located substantially above the water tank 4. An advantage of this arrangement is that the water tank 4 acts as a load-bearing structure for the installation unit. The water tank additionally stabilizes the apparatus as the centre of gravity is located as low as possible and on an area as extensive as possible. In the exemplary embodiment, the movement of the tilling members 10 and planting members 11 of the installation unit is linear and adjustable in the longitudinal, width, as well as depth directions. In the embodiment, the seedling handling units 6 are independent and move with the planting unit.

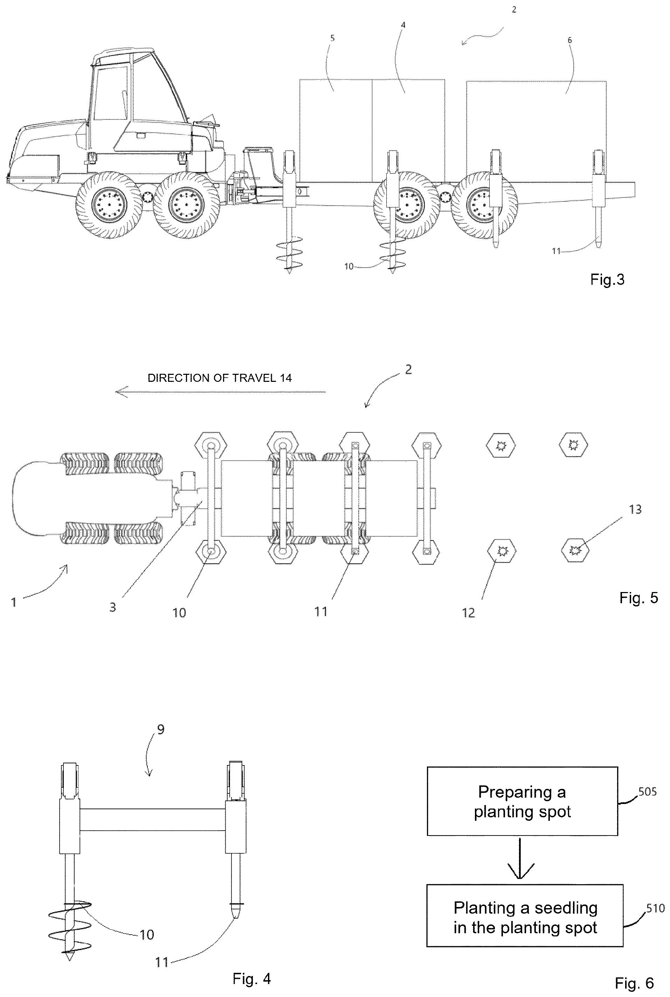

In an exemplary embodiment, the apparatus is arranged on a transport platform, with the tank being located at substantially the front part of the transport platform. In the embodiment shown in Figure 3, the water tank 4 and fertilizer tank 5 are located at substantially the front part of the apparatus, separate from the seedling handling unit 6.

An example shows a work machine to move a transport platform, the work machine comprising means for moving it, means for determining a stopping point, and means for stopping, and the planting apparatus arranged on the transport platform moved by a work machine is activated in response to the work machine stopping. The embodiment serving as an example implements a method for planting seedlings, in which method a planting spot is tilled by the apparatus, and a plant is put in this planting spot, and in which method these work stages are separated and implemented substantially simultaneously.

In an example, the installation unit comprises a tilling member and planting member. In an embodiment serving as an example, at least one tilling member and planting member are installed at a fixed distance from each other as the installation unit. The distance may be set appropriate situation-specifically before commencing work. When a fixed distance is set, the distance will stay substantially the same until a new setting is made. The installation unit, which comprises at least the tilling member and planting member, is moved forward along with the planting apparatus e.g. on a transport platform, with synchronized stops at intervals corresponding to the distance between the tilling member and planting member.

The installation units are arranged in the apparatus on its sides, outside the outer edges of the transport platform, as seen from above.

In an example, the apparatus comprises one installation unit on both longitudinal sides of the apparatus.

In an example, the apparatus comprises more than one installation unit on both longitudinal sides of the apparatus. The longitudinal sides of the apparatus are the sides that are visible when examining the apparatus in the lateral direction, and on the left and right side of the apparatus when examining it in its direction of travel.

Figure 4 shows an example of an embodiment of the installation unit 9. In the exemplary embodiment, the installation unit consists of at least one tilling member 10 for preparing a specified area, the specified area comprises a specified target area, and of at least one planting member 11 arranged to place a seedling in said specified target area.

The tilling member and planting member are arranged to be activated in response to the apparatus stopping. When activated, both members carry out the tasks defined for them: the tilling member prepares a planting spot at the stopping point for planting a seedling, and the planting member plants a seedling at the stopping point. The distance between a first stopping point and a second stopping point depends on the fixed distance between the tilling member and planting member of the installation unit. At the first stopping point, the tilling members prepares a planting spot in the ground, where a seedling can be planted. Next, the apparatus moves along with the transport platform which moves it forward by a transition corresponding to the distance between the tilling member and planting member to a second stopping point. In such a case, the planting member stops at the point where the tilling member was at the preceding stop, and places a seedling in said planting spot which the tilling member prepared at the preceding stop. Simultaneously at this second stop, the tilling member, installed in the apparatus to be the first in the travelling direction, prepares the ground at the subsequent stopping point to prepare the subsequent planting spot.

In an example, the apparatus is installed on a transport platform moved by an appropriate work machine, such as a forwarder, tractor or another suitable vehicle. When the work machine stops, the tilling member and planting member are activated. The apparatus being activated in response to stopping may comprise a manual activation or automatic activation. An automatic activation in response to stopping may be arranged e.g. by connecting the tilling member and planting member to a control unit and by determining a desired activation time. A manual activation in response to stopping may be arranged e.g as a measure taken by a driver.

In an example, the apparatus being activated in response to stopping may comprise a manual activation or automatic activation as the apparatus stops.

In an example, the apparatus being activated in response to stopping may comprise a manual activation or automatic activation after the apparatus has stopped.

Figure 5 is a top view of an embodiment of the operation of a work machine and a planting apparatus arranged on a transport platform. The installation units are arranged on the sides of the transport platform. In the example, planting takes place outside of the outer edges of the apparatus. In addition, Figure 5 shows works results made by the apparatus, in other words planting spots where plants have been planted. Figure 5 shows a direction of travel 14, in which the work machine 1 moves the apparatus 2 arranged on the transport platform 3. The tilling member 10 tills a planting spot 12, shown as a hexagon in Figure 5, into the ground. A planting spot is a spot prepared by the tilling member, where the conditions for the seedling to start growing are arranged as advantageous as possible. The planting member 11 plants a seedling 13 in said planting spot.

Figure 6 is a schematic representation of a method where, at first, a planting spot 505 is prepared, and then a seedling is planted in the planting spot 510.

These work stages, preparing the ground and planting seedlings, are separate actions and they may be implemented at the same time as distinct from using, as is a common way in mechanical forest processing, a working head located at a boom end, where at the first work stage a tilling tool prepares the ground while a planting tool is waiting, and at the subsequent work stage the planting tool places a seedling in the target area while the tilling tool is waiting. Performing the work stages simultaneously has the advantage of the work being performed faster.

It is possible to install a plurality of installation units successively in series depending on the size of the available apparatus and the desired planting distance between seedlings. The distance between the tilling member and planting member comprised by the installation unit is the same as the distance between the planted seedlings, i.e. planting density. If the goal is a small planting density, the members may be installed close to each other in the travelling direction of the apparatus, and correspondingly if the goal is a bigger planting density the members may be installed further away from each other. The targeted planting density depends on the wood species being planted and the habitat.

The installation units may be arranged in the apparatus in e.g. such a manner that the first installation unit is arranged on a first side of the transport platform and the second installation unit is arranged on a second side of the transport platform. There may be installation units installed on the first side of the apparatus e.g. in series of two, whereby the two preceding tilling members stop at the target area. In response to stopping, the two tilling members prepare two planting areas in the ground. As the apparatus moves forward along with the platform moving it, the two planting members, in turn, move to the described two target areas, which place the seedlings to the target areas at the same time as the tilling members prepare the subsequent two planting areas According to the same logic, the installation units may be e.g. series of three, four, five etc. installation units. It is possible to install the required number of such series in parallel, depending on the structure of the planting apparatus, such as 2 to 20 pcs. In such a case, the planting density is adjusted not only by adjusting the distance between the tilling member and planting member comprised by the installation unit, but also by adjusting the distance between the installation units installed in parallel.

In an embodiment, at least one tilling member is arranged substantially at the front of the apparatus, and at least one planting member at substantially the rear of the apparatus. The direction of travel of the apparatus defines the front to refer to the part that is the first in the direction of travel, and the rear refers to the subsequent part in the direction of travel. In the exemplary embodiment of Figures 2 and 3, installation units have been installed in series of two on two sides of the planting apparatus.

The tilling member comprised by the installation unit may comprise different kinds of means suitable for breaking and forming the ground surface, such as blades, drill bits, bores, ploughs, or other shaping tools. The tilling member is arranged to till the land area comprised by the planting spot. The purpose of tilling is to prepare the land area for planting a seedling, to create as good as possible growth start conditions. In such a case, other vegetation may be removed from the area being tilled, or the ground may be tilled softer. The tilling depth varies according to the soil and soil type, other growth conditions, and the seedlings being planted. A typical tilling depth may be e.g. 0 to 100 cm, and it may be e.g. 30 cm, 60 cm, or 90 cm. If need be, in connection with tilling, nutrients may be added in the soil, such as fertilizers or substances improving the composition of the soil, such as substances which adjust the acid content. An advantage of adding these is an improvement in the growing conditions of the seedling, whereby the seedling is more likely to start growing well.

The tilling member prepares the ground over a limited area for the planting of a seedling. The prepared area may be square, rectangular, circular, hole, or oval in form. The tilling member may additionally be arranged to shape the land area elevated in relation to the ground into an area suitable for planting a seedling, such as a hummock. For the purpose of shaping an elevated target area, the members comprised by the tilling member, such as blades, may be arranged to gather soil from the periphery of the target area being tilled towards its inner circle. The total square area of the prepared land area may vary e.g. between 0.1 and 0.8 m² and may be e.g. 0.2 m², 0.5 m² or 0.7 m².

A procedure where land is prepared by tilling it in a point-like manner on the required area, compared to continuous tilling such as preparing furrows, or tilling the entire land area in question, reduces negative environmental impacts caused by tilling, such as nutrients' dissolving in the water systems, caused by breaking the ground surface. Furthermore, point-like tilling over a needed area, from the viewpoint of planting, reduces the germination of weeds and undesired wood species, caused by breaking the ground surface. This way, also costs savings are achieved when labour-intensive clearing and weeding procedures are avoided, which might be necessary for improving the growth conditions of planted seedlings, if the amount of weeds and undesired wood species were to increase too much in the vicinity of the planted seedlings.

In addition to the tilling member, the installation unit comprises a planting member. For example, a planting member comprises a guide to place a seedling in the target area. The guide may be a planting tube, for example. A space is formed in the ground which has been tilled with a tip part of the guide, where a part of a seedling comprising with the roots may be placed. A seedling moved to the mouth of the guide slides along its inner surface to the space formed for it in the tilled land area.

The guide comprised by the planting member may comprise a tube which may be square, round, or parallelogram, and its size may be adapted to match the size of seedlings beings planted at any one time. The guide may also be a chute by means of which a seedling is placed in the target area, or the guide may be a mechanical gripping member that takes the seedling to the target area. The placement of a seedling in the target area may be enhanced in the guide by the use of compressed air, for example, whereby the seedling can be placed more densely and deeper in the ground. The advantage of using a guide, such as a tube, is the precise placement of a seedling in the desired place.

In the exemplary embodiment, in which the planting member comprises e.g. a tube, this same tube may also be used to guide irrigation water to the seedling. An advantage achieved by this is an improvement in the reliability of the apparatus, as the irrigation water while running through the planting pipe to a seedling sluices the pipe from the inside, and cleans it off soil and other residues the seedling clods have left. An advantage is a reduction in malfunctions and service breaks caused by the pipe clogging up. A further advantage of using a pipe comprised by the planting member for leading water to a seedling is that the apparatus structure becomes simpler and lighter when separate means need not be added for the purpose.

The planting member also comprises means to compact the ground surface around a seedling planted in the target area. The means for compacting may comprise a circular device around the planting pipe, operating and moving vertically. Once the planting pipe has placed a seedling in a hole prepared in the ground in the target area, the compacting means presses the soil that was accumulated around the planting hole in tilling into a formation supporting the root clod of the seedling. An advantage of compacting the ground surface is a more solid position of the seedling, whereby the risks of the seedling falling or starting to grow inclined is reduced and the productivity of tree farming maintains at the targeted level.

In addition to the installation unit, the apparatus may comprise at least one seedling handling unit, the seedling handling unit comprising a space to receive at least one seedling box, and at least one seedling gripper, the seedling gripper being arranged to take a seedling from the seedling box to the planting member.

For example, in an embodiment the seedling gripper comprises a clamp-like device, tensioned by means of a spring structure made of metal wire. In the example, the seedling gripper further comprises a gripping part whose size matches the size of the root clod comprised by the seedling. The gripping part may be manufactured of plastic or metal, for example. In the embodiment of the example, the seedling gripper fetches a seedling from a seedling box, carries it to the mouth of the pipe comprised by the planting member and releases the compression with a magnet switch whereby the seedling falls into the planting pipe from which the planting member places it to the prepared target area. Guiding a seedling along a planting pipe may also make use of compressed air, whereby the seedling may be placed more firmly in the planting hole.

Seedlings used in forest planting are typically delivered packed in seedling boxes from plant nurseries. The size of seedling boxes may vary e.g.4 x 7 pcs. to 25 x 100 pcs and may be e.g. 9 x 14 pcs, 12 x 36 pcs. or 20 x 80 pcs. The seedlings are approximately 5 to 50 cm tall, the size varying according to the wood species and the targeted location of purpose of the seedling. Seedlings delivered in boxes have a small amount of soil around the roots, such as a cylindrical clod corresponding in size to a small pot with a 3 to 9 cm diameter. It is also possible to use wrappings made of a biodegradable material around the root clod, making it easier to handle the seedling.

The difference between the seedling handling arranged described in the above and the conventionally-used arrangements is the movement of the seedling gripper while the seedling boxes remain in place. It is possible to use a plurality of seedling grippers at the same time, whereby each planting member comprised by the planting apparatus is simultaneously fed by a plurality of seedling grippers that take seedlings from a plurality of seedling boxes. In planting devices, a conventional solution is that each planting member is fed with one feeding device at a time from one seedling box. Once the seedling box is empty, it is moved out and replaced with a full one. Moving empty seedling boxes to replace them with full ones requires space, so the arrangement according to the solution, in which the seedling boxes stay in place while the seedling gripper moves, allows a substantially larger number of seedlings to be loaded in one go. In the exemplary embodiment, the space that is saved from moving seedling boxes may be utilized by packing a larger number of seedlings in the apparatus. An advantage of a larger number of seedlings is an improved work efficiency due to the number or breaks, needed to remove empty seedling boxes and packing new seedling boxes, is reduced.

The apparatus moves along with the transport platform which is moved by a suitable work machine. The work machine may be a forest work machine, forwarder, a tractor, or another device or device suitable for the use. The apparatus is operatively connected to a control unit, the control unit being arranged to determine a stopping point for the apparatus. An operative connection comprises a connection through a concrete connection or connecting wirelessly, for example.

The control unit is arranged to determine a stopping point for the apparatus by making use of precision positioning or by defining the stopping point by calculating the distance travelled by the apparatus. An advantage of the apparatus being positioned in the determined stopping point is the succeeding of the seedling planting in the planting spot prepared for it.

An exemplary control unit may be arranged to determine the correct stopping point by making use of precision positioning. The exemplary embodiment, where precision positioning is used to determine the correct stopping point, may use positioning based on satellites, for example. An example of a satellite-based system is RTK (Real Time Kinematic), achieving a measurement accuracy in the millimetre range.

The correct stopping point may also be determined on the basis of the distance travelled by the apparatus. In an example, this may be implemented from the drive transmission of the work machine by known methods, such as by calculating the distance travelled by the wheels, or the rotations of the axle or drive pump. An advantage of such determination of the stopping point based on such a mechanical solution is its freedom from factors external to the apparatus, such as a connection to satellites. This results in improved reliability of the apparatus, and the usage areas need not be limited to areas with a good connection to satellites.

In an exemplary embodiment, the control unit is arranged to determine the stopping point of the apparatus by determining the suitability of the soil as a planting spot on the basis of information gathered by imaging. Imaging may comprise e.g. non-contacting imaging and measuring. Methods of non-contacting imaging include e.g. laser measurement or the use of a radar, or imaging by a camera, distance camera, or stereo camera. As technologies advance, there will be new alternatives to identify suitable planting places.

When image information is used as the basis of evaluation, information based on a static or moving image may be used. When processing image information and making evaluation, fluoroscopy, or separation of materials or colours, may be used. For example, to determine a correct stopping point, equipment based on camera technology may be used. In this case, the control unit is arranged to determine a correct stopping point and working area, in addition to the desired planting distance, on the basis of a visual inspection. An advantage of the arrangement is, in particular, avoidance of unfavourable planting places, such as planting over a rock or stump. By making sure that seedlings are planted in favourable planting places, good productivity is achieved for timber growing.

When the apparatus has positioned at the stopping point, the positioning of a seedling substantially in the middle of the tilled area may still be improved by adjusting the tilling member and planting member. An advantage of the ability to adjust is that the entire apparatus need not be moved after stopping. In an exemplary embodiment, the tilling member and planting member comprised by the installation units may be adjustable forward or rearward in relation to the travelling direction of the apparatus. The ability to adjust improves the accuracy of a seedling hitting the tilled spot in the ground. Moving the tilling and planting members forward or rearward in relation to the travelling direction improves the hitting of the seedling into the planting spot in a curve or uneven underlay, for example. If need be, both the tilling member and planting member may also move laterally in relation to the travelling direction or the apparatus to make the hitting accuracy of the seedling in the tilled planting spot more precise. For example, if the planting spot tilled by the tilling member shifts slightly aside from that which was determined based on parking information due to e.g. a stone located in the original spot, the planting member following behind changes its position accordingly so that the placement of the seedling in the tilled planting spot succeeds.

In an embodiment, the apparatus is defined to leave a seedling un-planted, if at the stopping point of the apparatus there is no identifiable favourable planting spot within the adjustment distance available to the tilling member and planting member. An advantage lies in the quantity of seedlings needed, when seedlings are only used in favourable places of growth. In an embodiment, the control units enters a stopping point where planting was not possible in its memory.

In an embodiment the tilling member and planting member may be tilted in relation to the travelling direction of the apparatus. This is a useful feature in a terrain with difference of height. Tilting in relation to the travelling direction of the apparatus allows a seedling to be planted vertically even if the planting spot were in a slope. In addition, tilting the tilling member and planting member achieves the planting distance remaining as desired even where differences of height are present. Tilting the members benefits wood production when the desired density of seedlings can be planted, and they start to grow well as early as possible.

In an embodiment the tilling member and planting member may be laterally tilted independently of each other in relation to the travelling direction of the apparatus. In an embodiment the tilling member and planting member may be tilted independently of each other in relation to the vertical axis of the machine. When the tilling member and planting member may be tilted or turned independently of each other, the tilling member may be tilted or turned laterally in relation to the travelling direction of the apparatus while the planting member stays at the initial position, and vice versa. Turning may also refer to rotating.

When planting seedlings, it is important to secure as good as possible growth start conditions. When using the apparatus according to the solution, a seedling may be watered in connection with planting it, and the necessary nutrients provided, which are needed at the start of growth. In manual work, carrying water and fertilizers to seedlings, and the watering and fertilizing themselves, is a heavy and expensive task due to its labour intensiveness. In addition, the amount of water and fertilizers that single seedlings obtain may vary. To increase uniformity, irrigation and fertilizing operations may be targeted on the entire planted area from the air, for example, but this means wasting both water and fertilizers because there are plants at specific intervals, only.

In the planting work carried out mechanically with the apparatus according to the solution, the amount of irrigation water and fertilizers may be determined according to the conditions, and there will be no variation in the quantity or accuracy, typical for manual work. Thus, less water and fertilizers are used when the needed amount of them is aimed directly to the root of the seedling. An advantage of the lesser quantities are the savings from transportation and handlings, as well as environmental savings.

From the viewpoint of forestry, an advantage of using the apparatus according to the application is that planting seedlings is systematically implemented with the desired density, and that the planted seedlings obtain the water and nutrients they need, and consequently as good as possible prerequisites are guaranteed for their start of growth. An advantage of a good growth start process is that, at first, expensive replanting is avoided, and, later on, good production volumes of timber growing.

Those skilled in the art will find it obvious that, as technology advances, the basic idea of the invention may be implemented in many different ways. The invention and its embodiments are thus not restricted to the examples described above but may vary within the scope of the claims.

## Claims

1. An apparatus for planting seedlings, which is installable on a transport platform (3), the apparatus comprising
at least one tilling member (10) for preparing a planting spot (12);
at least one planting member (11), installed at a distance from the tilling member (10) and arranged to put in a seedling (13) in said planting spot (12);
the apparatus being arranged to move, stopping at intervals corresponding to the distance between the tilling member (10) and planting member (11);
in response to the stopping of the apparatus the planting member (11) is arranged to put in a seedling (13) in the planting spot (12) prepared by the tilling member (10)
wherein
the apparatus comprises at least two installation units, each installation unit comprising a tilling member (10) and planting member (11); and
of which the first installation unit is arranged on a first side of the transport platform (3) and the second installation unit is arranged on a second side of the transport platform (3)**, characterized in**
**that** the installation units are arranged in the apparatus on its sides, outside the outer edges of the transport platform (3), as seen from above.

2. An apparatus as claimed in claim 1, the moving of which is arranged by installing the apparatus on a transport platform (3) which is made move by a suitable work machine.

3. An apparatus as claimed in any claim 1 or 2, wherein the planting member (11) comprises a guide to place a seedling (13) in the target area.

4. An apparatus as claimed in any one of the preceding claims, wherein the tilling member (10) and planting member (11) are tiltable in relation to the travelling direction of the apparatus.

5. An apparatus as claimed in any one of the preceding claims, wherein the tilling member (10) and planting member (11) are tilted independently of each other in the lateral direction, substantially in relation to the travelling direction of the apparatus.

6. An apparatus as claimed in any one of the preceding claims, wherein the tilling member (10) and planting member (11) are turned independently of each other in relation to an axis in the direction of the vertical axis of the apparatus.

7. An apparatus as claimed in any one of the preceding claims, wherein tilling member (10) and planting member (11) are arranged to be activated in response to the apparatus stopping.

8. An apparatus as claimed in any one of the preceding claims, wherein the apparatus is operatively connected to a control unit, the control unit being arranged to determine a correct stopping point for the apparatus, and the control unit is arranged to determine a stopping point for the apparatus by making use of precision positioning or by calculating the distance travelled by the apparatus, or the control unit is arranged to determine the stopping point of the apparatus by determining the suitability of the soil as a planting spot on the basis of information gathered by non-contacting imaging.

9. An apparatus as claimed in any one of the preceding claims, wherein the tilling member (10) and planting member (11) are installed at a fixed distance from each other as the installation unit.

10. An apparatus as claimed in claim 8 or 9, wherein the distance between a first stopping point and a second stopping point depends on the fixed distance between the tilling member (10) and planting member (11) of the installation unit.

11. An apparatus as claimed in any one of the preceding claims, comprising at least one tank (4, 5), which apparatus is arranged on a transport platform (3) and wherein the tank (4, 5) covers the transport platform (3) in the longitudinal direction, or the tank (4, 5) being located at substantially the front part of the transport platform (3).

12. An apparatus as claimed in any one of the preceding claims, wherein at least one tilling member (10) is arranged substantially at the front of the apparatus, and at least one planting member (11) at substantially the rear of the apparatus.

13. An apparatus as claimed in any one of the preceding claims, comprising a seedling handling unit (6), the seedling handling unit (6) comprising a space to receive at least one seedling box (7), and at least one seedling gripper (8), the seedling gripper (8) being arranged to take a seedling (13) from the seedling box (7) to the planting member (11).

14. A work machine for moving a transport platform, the work machine comprising means for moving it, means for determining a stopping point, and means for stopping, and a planting apparatus as claimed in any one of the preceding claims arranged on the transport platform (3) moved by the work machine being activated in response to the work machine stopping.

15. A method for planting seedlings, in which method a planting spot (12) is tilled by the apparatus as claimed in any one of claims 1 to 14, and a plant is placed in this planting spot (12), and in which method these work stages are separated and implemented substantially simultaneously.

## Patentansprüche

1. Einrichtung zum Pflanzen von Setzlingen, die auf einer Transportplattform (3) installierbar ist, wobei die Einrichtung folgendes umfasst
mindestens ein Bodenbearbeitungselement (10) zum Präparieren einer Pflanzstelle (12);
mindestens ein Pflanzelement (11), das in einem Abstand zum Bodenbearbeitungselement (10) installiert und angeordnet ist, um einen Setzling (13) in die Pflanzstelle (12) zu setzen;
wobei die Einrichtung angeordnet ist, um sich zu bewegen, in Intervallen stoppt, die dem Abstand zwischen dem Bodenbearbeitungselement (10) und dem Pflanzelement (11) entsprechen;
als Antwort auf das Stoppen der Einrichtung ist das Pflanzelement (11) angeordnet, um einen Setzling (13) in die von dem Bodenbearbeitungselement (10) präparierte Pflanzstelle (12) zu setzen,
wobei die Einrichtung mindestens zwei Installationseinheiten umfasst, wobei jede Installationseinheit ein Bodenbearbeitungselement (10) und ein Pflanzelement (11) umfasst; und
wobei die erste Installationseinheit auf einer ersten Seite der Transportplattform (3) und die zweite Installationseinheit auf einer zweiten Seite der Transportplattform (3) angeordnet ist, **dadurch gekennzeichnet, dass** die Installationseinheiten in der Einrichtung an deren Seiten, von oben gesehen außerhalb der Ränder der Transportplattform (3), angeordnet sind.

2. Einrichtung nach Anspruch 1, deren Bewegung durch Installieren der Einrichtung auf einer Transportplattform (3) angeordnet wird, die von einer geeigneten Arbeitsmaschine bewegt wird.

3. Einrichtung nach einem der Ansprüche 1 oder 2, wobei das Pflanzelement (11) eine Führung zum Platzieren eines Setzlings (13) im Zielbereich umfasst.

4. Einrichtung nach einem der vorstehenden Ansprüche, wobei das Bodenbearbeitungselement (10) und das Pflanzelement (11) in Bezug auf die Fahrtrichtung der Einrichtung neigbar sind.

5. Einrichtung nach einem der vorstehenden Ansprüche, wobei das Bodenbearbeitungselement (10) und das Pflanzelement (11) unabhängig voneinander in lateraler Richtung, im Wesentlichen in Bezug auf die Fahrtrichtung der Einrichtung, geneigt sind.

6. Einrichtung nach einem der vorstehenden Ansprüche, wobei das Bodenbearbeitungselement (10) und das Pflanzelement (11) unabhängig voneinander in Bezug auf eine Achse in Richtung der vertikalen Achse der Einrichtung gedreht werden.

7. Einrichtung nach einem der vorstehenden Ansprüche, wobei das Bodenbearbeitungselement (10) und das Pflanzelement (11) angeordnet sind, um als Antwort darauf, dass die Einrichtung stoppt, aktiviert werden.

8. Einrichtung nach einem der vorstehenden Ansprüche, wobei die Einrichtung funktionsfähig mit einer Steuereinheit verbunden ist, wobei die Steuereinheit angeordnet ist, um einen korrekten Stopppunkt für die Einrichtung zu bestimmen, und die Steuereinheit angeordnet ist, um einen Stopppunkt für die Einrichtung durch Verwendung einer Präzisionspositionierung oder durch Berechnen des Abstands, der von der Einrichtung gefahren wurde, zu bestimmen, oder die Steuereinheit angeordnet ist, um den Stopppunkt der Einrichtung durch Bestimmen der Eignung des Bodens als eine Pflanzstelle auf der Grundlage von Informationen zu bestimmen, die durch berührungslose Bildgebung erfasst wurden.

9. Einrichtung nach einem der vorstehenden Ansprüche, wobei das Bodenbearbeitungselement (10) und das Pflanzelement (11) in einem festen Abstand zueinander als die Installationseinheit installiert sind.

10. Einrichtung nach Anspruch 8 oder 9, wobei der Abstand zwischen einem ersten Stopppunkt und einem zweiten Stopppunkt von dem festen Abstand zwischen dem Bodenbearbeitungselement (10) und dem Pflanzelement (11) der Installationseinheit abhängt.

11. Einrichtung nach einem der vorstehenden Ansprüche, umfassend mindestens einen Behälter (4, 5), wobei die Einrichtung auf einer Transportplattform (3) angeordnet ist, und wobei der Behälter (4, 5) die Transportplattform (3) in longitudinaler Richtung überdeckt, oder der Behälter (4, 5) im Wesentlichen im vorderen Teil der Transportplattform (3) lokalisiert ist.

12. Einrichtung nach einem der vorstehenden Ansprüche, wobei mindestens ein Bodenbearbeitungselement (10) im Wesentlichen am vorderen Ende der Einrichtung und mindestens ein Pflanzelement (11) im Wesentlichen am hinteren Ende der Einrichtung angeordnet ist.

13. Einrichtung nach einem der vorstehenden Ansprüche, umfassend eine Setzlingshandhabungseinheit (6), wobei die Setzlingshandhabungseinheit (6) einen Raum zum Aufnehmen mindestens einer Setzlingskiste (7) und mindestens eines Setzlingsgreifers (8) umfasst, wobei der Setzlingsgreifer (8) angeordnet ist, um einen Setzling (13) aus der Setzlingskiste (7) zum Pflanzelement (11) zu befördern.

14. Arbeitsmaschine zum Bewegen einer Transportplattform, wobei die Arbeitsmaschine Mittel zu ihrem Bewegen, Mittel zum Bestimmen eines Stopppunkts und Mittel zum Stoppen umfasst, und eine Pflanzeinrichtung nach einem der vorstehenden Ansprüche, die auf der von der Arbeitsmaschine bewegten Transportplattform (3) angeordnet ist und als Antwort darauf, dass die Arbeitsmaschine stoppt, aktiviert wird.

15. Verfahren zum Pflanzen von Setzlingen, bei dem eine Pflanzstelle (12) durch die Einrichtung nach einem der Ansprüche 1 bis 14 geneigt wird, und eine Pflanze in diese Pflanzstelle (12) gesetzt wird, und bei dem diese Arbeitsschritte voneinander getrennt und im Wesentlichen gleichzeitig implementiert werden.

## Revendications

1. Appareil de plantation de jeunes plants, qui peut être installé sur une plateforme de transport (3), l'appareil comprenant
au moins un organe de travail du sol (10) pour préparer un point de plantation (12) ;
au moins un organe de plantation (11), installé à une distance de l'organe de travail du sol (10) et agencé pour mettre en place un jeune plant (13) dans ledit point de plantation (12) ;
l'appareil étant agencé pour se déplacer, en s'arrêtant à des intervalles correspondant à la distance entre l'organe de travail du sol (10) et l'organe de plantation (11) ;
en réponse à l'arrêt de l'appareil, l'organe de plantation (11) est agencé pour mettre en place un jeune plant (13) dans le point de plantation (12) préparé par l'organe de travail du sol (10)
dans lequel l'appareil comprend au moins deux unités d'installation, chaque unité d'installation comprenant un organe de travail du sol (10) et un organe de plantation (11) ; et
dont la première unité d'installation est agencée sur un premier côté de la plateforme de transport (3) et la seconde unité d'installation est agencée sur un second côté de la plateforme de transport (3), **caractérisé en ce que** les unités d'installation sont agencées dans l'appareil sur ses côtés, à l'extérieur des bords extérieurs de la plateforme de transport (3), vu de dessus.

2. Appareil selon la revendication 1, dont le déplacement est assuré par l'installation de l'appareil sur une plateforme de transport (3) qui est déplacée par une machine de travail appropriée.

3. Appareil selon l'une quelconque de la revendication 1 ou de la revendication 2, dans lequel l'organe de plantation (11) comprend un guide pour placer un jeune plant (13) dans la zone cible.

4. Appareil selon l'une quelconque des revendications précédentes, dans lequel l'organe de travail du sol (10) et l'organe de plantation (11) sont aptes à être inclinés par rapport à la direction de déplacement de l'appareil.

5. Appareil selon l'une quelconque des revendications précédentes, dans lequel l'organe de travail du sol (10) et l'organe de plantation (11) sont inclinés indépendamment l'un de l'autre dans la direction latérale, sensiblement par rapport à la direction de déplacement de l'appareil.

6. Appareil selon l'une quelconque des revendications précédentes, dans lequel l'organe de travail du sol (10) et l'organe de plantation (11) sont tournés indépendamment l'un de l'autre par rapport à un axe dans la direction de l'axe vertical de l'appareil.

7. Appareil selon l'une quelconque des revendications précédentes, dans lequel l'organe de travail du sol (10) et l'organe de plantation (11) sont agencés pour être activés en réponse à l'arrêt de l'appareil.

8. Appareil selon l'une quelconque des revendications précédentes, dans lequel l'appareil est en liaison fonctionnelle avec une unité de commande, l'unité de commande étant agencée pour déterminer un point d'arrêt correct pour l'appareil, et l'unité de commande est agencée pour déterminer un point d'arrêt pour l'appareil en faisant usage d'un positionnement de précision ou en calculant la distance parcourue par l'appareil, ou l'unité de commande est agencée pour déterminer le point d'arrêt de l'appareil en déterminant l'aptitude du sol en tant que point de plantation sur la base d'informations recueillies par imagerie sans contact.

9. Appareil selon l'une quelconque des revendications précédentes, dans lequel l'organe de travail du sol (10) et l'organe de plantation (11) sont installés à une distance fixe l'un de l'autre en tant qu'unité d'installation.

10. Appareil selon l'une de la revendication 8 ou de la revendication 9, dans lequel la distance entre un premier point d'arrêt et un second point d'arrêt dépend de la distance fixe entre l'organe de travail du sol (10) et l'organe de plantation (11) de l'unité d'installation.

11. Appareil selon l'une quelconque des revendications précédentes, comprenant au moins un réservoir (4, 5), lequel appareil est agencé sur une plateforme de transport (3) et dans lequel le réservoir (4, 5) couvre la plateforme de transport (3) dans la direction longitudinale, ou le réservoir (4, 5) étant situé sensiblement au niveau de la partie avant de la plateforme de transport (3).

12. Appareil selon l'une quelconque des revendications précédentes, dans lequel au moins un organe de travail du sol (10) est agencé sensiblement à l'avant de l'appareil, et au moins un organe de plantation (11) sensiblement à l'arrière de l'appareil.

13. Appareil selon l'une quelconque des revendications précédentes, comprenant une unité de manutention des jeunes plants (6), l'unité de manutention des jeunes plants (6) comprenant un espace pour recevoir au moins une caisse de jeunes plants (7), et au moins un préhenseur de jeunes plants (8), le préhenseur de jeunes plants (8) étant agencé pour apporter un jeune plant (13) de la caisse de jeunes plants (7) vers l'organe de plantation (11).

14. Machine de travail pour déplacer une plateforme de transport, la machine de travail comprenant des moyens pour la déplacer, des moyens pour déterminer un point d'arrêt, et des moyens pour arrêter, et un appareil de plantation selon l'une quelconque des revendications précédentes agencé sur la plateforme de transport (3) déplacée par la machine de travail étant activé en réponse à l'arrêt de la machine de travail.

15. Procédé de plantation de jeunes plants, dans lequel procédé un point de plantation (12) est creusé par l'appareil selon l'une quelconque des revendications 1 à 14, et une plante est placée dans ce point de plantation (12), et dans lequel procédé lesdites étapes de travail sont séparées et mises en œuvre sensiblement simultanément.
